# EUROPÄISCHE PATENTANMELDUNG

(11) **EP 4 215 782 A1**
(43) Veröffentlichungstag der Anmeldung: **26.07.2023**
(21) Anmeldenummer: 23152463.8
(22) Anmeldetag: 19.01.2023
(51) Int. Cl.: F16K 11/07, B23P 19/04, F16H 61/00

(54) **SCHIEBERVENTIL UND MONTAGEHILFSVORRICHTUNG**

(30) Priorität: 20.01.2022 DE 102022200603
(71) Anmelder: ZF Friedrichshafen AG, 88046 Friedrichshafen (DE)
(72) Erfinder: Boncourt, Marcel, 66346 Püttlingen (DE)

(57) **Zusammenfassung**

Die Erfindung bezieht sich auf ein Schieberventil und Montagehilfsvorrichtung 22 zur Montage eines Ventilschiebers 6 in einer Gehäusebohrung 2 eines Ventilgehäuses 1 des Schieberventils, wobei der Ventilschieber 6 an seinem ersten Endbereich von einem an dem Ventilgehäuse 1 abgestützten vorgespannten Federelement kraftbeaufschlagt ist und der zweite Endbereich des Ventilschiebers 6 von einer Stellkraft entgegen der Kraft des Federelements beaufschlagbar ist, mit einer ersten Endposition, in der der axiale Bewegungsweg des Ventilschiebers 6 bei komprimiertem Federelement begrenzt ist und mit einer zweiten Endposition, in der der Bewegungsweg des Ventilschiebers 6 bei nichtkomprimiertem Federelement begrenzt ist, wobei die Gehäusebohrung 2 auf der dem Federelement entgegengesetzten Seite koaxial nach außen mündet und verschließbar ist. Die Montagehilfsvorrichtung 22 weist einen Montageschieber 15 auf, der in einer Führung 14 eines Führungsstücks 11 verschiebbar angeordnet ist und beidseitig aus der Führung 14 des Führungsstücks 11 herausragt, wobei das Führungsstück 11 einen ersten Anschlag 17 aufweist mit dem das Führungsstück 11 mit der Führung 14 koaxial zur Gehäusebohrung 2 zur Anlage auf das Ventilgehäuse 1 aufsetzbar ist, wobei der Montageschieber 15 bis zur Anlage an dem zweiten Endbereich des Ventilschiebers 6 in die Gehäusebohrung 2 ragt und wobei durch Kraftbeaufschlagung des Montageschiebers 15 unter Komprimieren des Federelements der Ventilschieber 6 bis zum Erreichen der ersten Endposition verschiebbar ist.

## Beschreibung

Die Erfindung bezieht sich auf ein Schieberventil und Montagehilfsvorrichtung zur Montage eines Ventilschiebers in einer Gehäusebohrung eines Ventilgehäuses des Schieberventils, wobei der Ventilschieber an seinem ersten Endbereich von einem an dem Ventilgehäuse abgestützten vorgespannten Federelement kraftbeaufschlagt ist und der zweite Endbereich des Ventilschiebers von einer Stellkraft entgegen der Kraft des Federelements beaufschlagbar ist, mit einer ersten Endposition, in der der axiale Bewegungsweg des Ventilschiebers bei komprimiertem Federelement begrenzt ist und mit einer zweiten Endposition, in der der Bewegungsweg des Ventilschiebers bei nichtkomprimiertem Federelement begrenzt ist, wobei die Gehäusebohrung auf der dem Federelement entgegengesetzten Seite koaxial nach außen mündet und verschließbar ist.

Bei derartigen Schieberventilen werden in die entsprechenden Gehäusebohrungen zuerst die Federelemente und danach die Ventilschieber eingeworfen und anschließend mittels einer Montagehilfsvorrichtung nach unten gedrückt. Im niedergedrückten Zustand wird dann ein Anschlagelement eingesetzt, das auch die Gehäusebohrung verschließen kann. Es ist dabei nur schwer bis gar nicht festzustellen, ob die Gehäusebohrung mit dem Federelement und/oder dem Ventilschieber richtig bestückt wurde oder eines dieser Teile fehlt.

Aufgabe der Erfindung ist es daher ein Schieberventil und Montagehilfsvorrichtung der eingangs genannten Art zu schaffen, wobei die Montagehilfsvorrichtung einfach aufgebaut, mit geringen Kräften betätigbar und eine korrekte Bestückung der Gehäusebohrung mit Federelement und/oder Ventilschieber feststellbar ist.

Diese Aufgabe wird erfindungsgemäß dadurch gelöst, daß die Montagehilfsvorrichtung einen Montageschieber aufweist, der in einer Führung eines Führungsstücks verschiebbar angeordnet ist und beidseitig aus der Führung des Führungsstücks herausragt, wobei das Führungsstück einen ersten Anschlag aufweist mit dem das Führungsstück mit der Führung koaxial zur Gehäusebohrung zur Anlage auf das Ventilgehäuse aufsetzbar ist, wobei der Montageschieber bis zur Anlage an dem zweiten Endbereich des Ventilschiebers in die Gehäusebohrung ragt und wobei durch Kraftbeaufschlagung des Montageschiebers unter Komprimieren des Federelements der Ventilschieber bis zum Erreichen der ersten Endposition verschiebbar ist.

Durch das Aufsetzen des Führungsstücks auf das Ventilgehäuse ist die Position des Führungsstücks zum Ventilgehäuse exakt definiert. Ist dann der Montageschieber bis zur Anlage an dem Ventilschieber bei nicht komprimiertem Federelement verschoben, kann anhand einer bestimmten größeren Länge des auf der dem Ventilgehäuse abgewandten Endes des aus dem Führungsstück herausragenden Montageschiebers optisch sofort erfasst und festgestellt werden, daß bis dahin die Montage korrekt erfolgt ist.

Erfolgt nun unter Kompression des Federelements durch die Stellkraft ein Einwärtsverschieben des Montageschiebers bis auf eine bestimmte geringere Länge des auf der dem Ventilgehäuse abgewandten Endes des aus dem Führungsstück herausragenden Montageschiebers, so kann ebenfalls optisch erfaßt werden, daß Federelement und Ventilschieber vollständig korrekt montiert sind.

Ist z.B. das Federelement verkanntet oder der Ventilschieber blockiert, so ist der Montageschieber nicht bis auf die bestimmte geringe Länge des auf der dem Ventilgehäuse abgewandten Endes des aus dem Führungsstück herausragenden Montageschiebers bewegbar, was damit anzeigt, daß die Montage von Federelement und/oder Ventilschieber nicht korrekt erfolgt ist.

In einfacher bauraumsparender Weise kann das Federelement eine Wendelfeder sein.

Ragt dabei die Wendelfeder mit ihrem ventilschieberseitigen Ende in eine Grundbohrung des Ventilschiebers, erhält sie eine Führung und kann nicht so schnell ausknicken.

Ein Anschlagelement kann an dem Ventilgehäuse montierbar sein, an dem der Ventilschieber in der zweiten Endposition in Anlage ist und so den Hub des Ventilschiebers in seine Richtung von dem Federelement weg begrenzt.

Das Anschlagelement kann dabei gleichzeitig als Verschlußelement für die Gehäusebohrung dienen.

Zum Verschieben des Ventilschiebers entgegen der Kraft des Federelements kann der zweite Endbereich des Ventilschiebers von einem Hydraulikdruck beaufschlagbar sein.

Weist der Montageschieber an seinem dem Ventilschieber zugewandten Endbereich einen koaxial hervorstehenden Stift auf, mit dem der Ventilschieber von dem Montageschieber beaufschlagbar ist, so wird die Reibung zwischen Montageschieber und Ventilschieber minimiert sowie Einbauraum geschaffen um das Anschlagelement zu montieren.

Der Mündungsbereich der nach außen mündenden Gehäusebohrung kann mit einem Gewinde versehen sein.

Dabei kann die nach außen mündende Gehäusebohrung mittels eines Schraubverschlusses verschließbar sein.

Auch ist es möglich, daß das Führungsstück an seinem auf das Ventilgehäuse aufsetzbaren Endbereichs einen Gewindestutzen aufweist, der in das Gewinde der Gehäusebohrung einschraubbar ist.

Zur einfachen Kraftbeaufschlagung des Montageschiebers durch eine Bedienungsperson weist der Montageschieber vorzugsweise an seinem aus der Führung des Führungsstücks nach außen herausragenden Ende einen Betätigungsknopf auf.

Ein Ausführungsbeispiel der Erfindung ist in der Zeichnung dargestellt und wird im Folgenden näher beschrieben. Es zeigen
- Figur 1: einen Längsschnitt eines Schieberventils und einer Montagehilfsvorrichtung in einem Ausgangszustand
- Figur 2: einen Längsschnitt des Schieberventils und der Montagehilfsvorrichtung nach Figur 1 in einer zweiten Endposition des Ventilschiebers
- Figur 3: einen Längsschnitt des Schieberventils und der Montagehilfsvorrichtung nach Figur 1 in einer ersten Endposition des Ventilschiebers
- Figur 4: einen Längsschnitt des Schieberventils und der Montagehilfsvorrichtung nach Figur 1nach Einsetzen eines Anschlagelements
- Figur 5: einen Längsschnitt des fertig montierten Schieberventils und der Montagehilfsvorrichtung nach Figur 1.

Die in den Figuren dargestellten Schieberventile weisen ein Ventilgehäuse 1 auf, in dem eine Gehäusebohrung 2 ausgebildet ist.

Die Gehäusebohrung 2 ist an ihrem unteren Ende 3 durch einen Boden 5 geschlossen und mündet an ihrem oberen Ende 4 nach außen.

Mit axialen Abständen zueinander sind im Ventilgehäuse mehrere Ventiltaschen ausgebildet, die radial in die Gehäusebohrung 2 münden.

In der Gehäusebohrung 2 ist ein Ventilschieber 6 verschiebbar angeordnet, der in axialem Abstand zueinander an seiner zylindrischen Mantelfläche mit nicht dargestellten radial umlaufenden Steuernuten versehen ist.

An seinem dem Boden 5 zugewandten Ende weist der Ventilschieber 6 eine zur Längserstreckung des Ventilschiebers 6 koaxiale Grundbohrung 7 auf, in die eine Wendeldruckfeder 8 mit einem Teil ihrer Länge eingesetzt und mit ihrem einen Ende am Grund 9 der Grundbohrung 7 abgestützt ist. Mit ihrem anderen Teil ragt die Wendeldruckfeder 8 aus der Grundbohrung 7 herausragt und ist am Boden 5 abgestützt.

Eine Montagehilfsvorrichtung 22 weist ein Führungsstück 11 runden Querschnitts
auf, das an einem Endbereich eine zylindrische Stufe 12 reduzierten Durchmessers besitzt, wobei dieser Durchmesser dem Durchmesser der Gehäusebohrung 2 an deren oberen Ende 4 entspricht. Der radiale Übergang von der Stufe 12 zu dem Bereich größerer radialer Erstreckung des Führungsstücks 11 bildet einen dritten Anschlag 13.

Koaxial zur zylindrischen Stufe 12 ist in dem Führungsstück 11 eine als Führungsbohrung ausgebildete durchgehende Führung 14 ausgebildet, in der ein an beiden Enden der Führung 14 aus dem Führungsstück 11 herausragender Montageschieber 15 verschiebbar angeordnet ist. Der Montageschieber 15 weist ein quer zur Längserstreckung des Montageschiebers 15 durchgehendes Langloch 16 auf, dessen Längserstreckung der Längserstreckung des Montageschiebers 15 entspricht.

Durch das Langloch 16 erstreckt sich quer zur Längserstreckung des Montageschiebers 15 ein Anschlagstift 19, der mit seinen Enden in Bohrungen entsprechenden Durchmessers im Führungsstück 11 hineinragt und dort befestigt ist.

Das der Gehäusebohrung 2 nähere Ende des Langlochs 16 bildet einen ersten Anschlag 17 und das der Gehäusebohrung 2 entferntere Ende des Langlochs 16 bildet einen zweiten Anschlag 18, wobei der Montageschieber 15 um einen axialen Bewegungsweg in der Führung 14 verschiebbar ist, der durch das Anschlagen des Anschlagstifts 19 an den Anschlägen 17 und 18 definiert ist.

An dem aus der Führung nach außen ragenden Ende des Montageschiebers 15 ist ein Betätigungsknopf 20 angeordnet.

Der Montageschieber 15 weist an seinem in die Gehäusebohrung 2 ragenden Ende einen koaxial hervorstehenden Stift 21 auf.

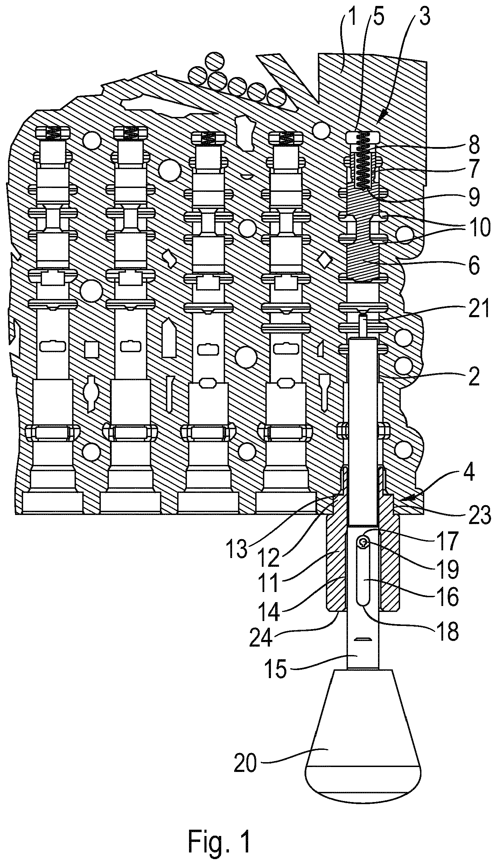

Wie in Figur 1 dargestellt wurde bereits der Ventilschieber 6 mit der Wendeldruckfeder in die Gehäusebohrung 2 eingeführt und die Montagehilfsvorrichtung 22 auf das Ventilgehäuse 1 so aufgesetzt, daß das Führungsstück 11 in das mit einer erweiterten Stufe 23 versehene obere Ende 4 der Gehäusebohrung 2 ragt und mit seinem dritten Anschlag 13 an dem radialen Übergang von der erweiterten Stufe 23 zu der Gehäusebohrung 2 zur Anlage kommt und der Montageschieber 15 in die Gehäusebohrung 2 ragt. Dabei kommt der Anschlagstift 19 an dem ersten Anschlag 17 zur Anlage.

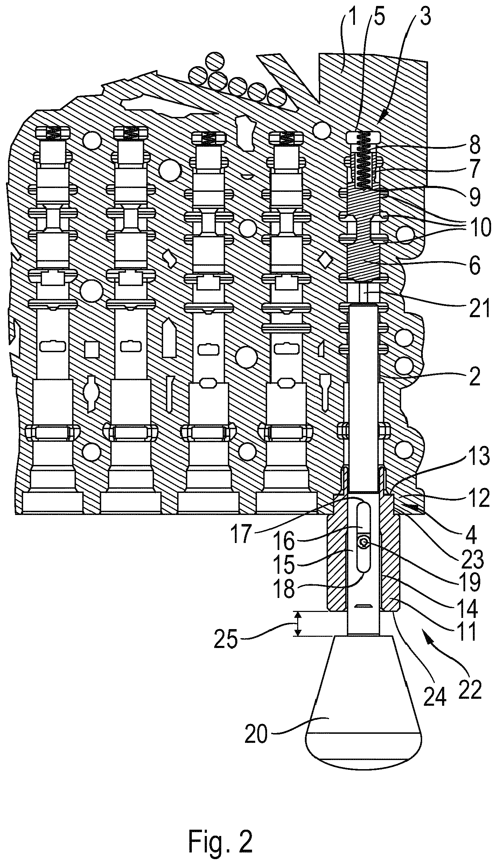

Nun erfolgt durch eine Kraftbeaufschlagung des Betätigungsknopfes 20 ein Einwärtsverschieben des Montageschiebers 15 bis zur Anlage des Stifts 21 an der ihm zugewandten Stirnseite des Ventilschiebers 6 (Figur 2). Dabei besteht noch ein erster Abstand 25 von beispielsweise 10 mm zwischen dem Betätigungsknopf 23 und der dem Ventilgehäuse 1 abgewandten Stirnseite des Führungsstücks 11.

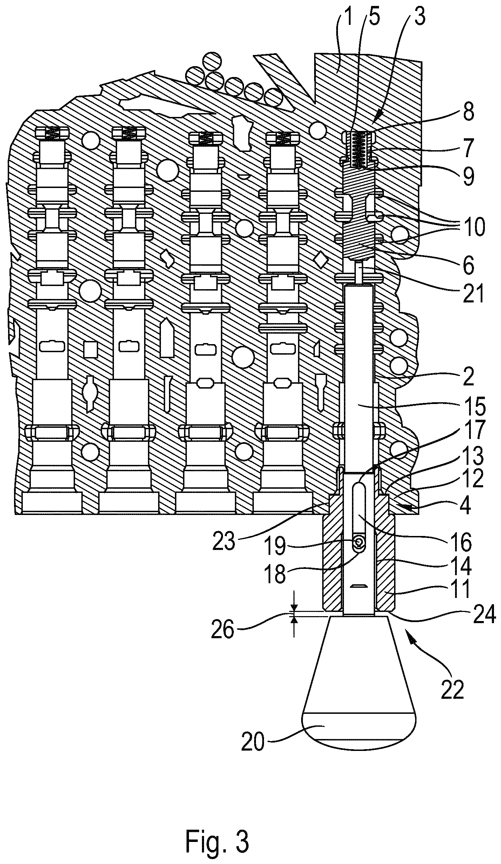

Bei weiterer Kraftbeaufschlagung des Betätigungsknopfes 23 wird durch den Stift 21 des Montageschiebers 15 der Ventilschieber 6 gegen die Kraft der Wendeldruckfeder 8 in eine erste Endposition verschoben, in der nur noch ein zweiter Abstand 26 von beispielsweise 1,5 mm zwischen dem Betätigungsknopf 23 und der dem Ventilgehäuse 1 abgewandten Stirnseite 24 des Führungsstücks 11 besteht (Figur 3).

Durch die Gegenkraft der Wendeldruckfeder 8 erhält die den Betätigungsknopf 23 beaufschlagende Person ein "haptisches Feedback". Ob die Wendeldruckfeder 8 tatsächlich bestückt ist. Würde die Wendeldruckfeder 8 fehlen, würde der Betätigungsknopf 23 bis zur Anlage an dem Führungsstück 11 gelangen und der Montageschieber 15 nicht dementsprechend einfedern.

Würde die Wendeldruckfeder 8 nicht korrekt in der Grundbohrung 7 des Ventilschiebers 6 sitzen, so würde der Montageschieber 15 nicht einfedern und die den Betätigungsknopf beaufschlagende Person würde sofort einen Widerstand spüren. Darüber hinaus wäre der Abstand zwischen dem Betätigungsknopf 23 und der dem Ventilgehäuse 1 abgewandten Stirnseite des Führungsstücks 11 größer als der zweite Abstand 26, was optisch sofort bemerkt werden würde.

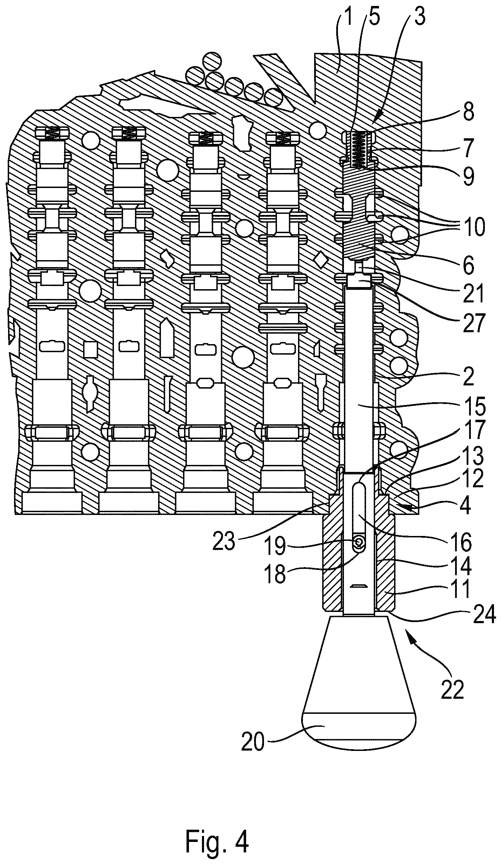

Wurde von der die Montage durchführenden Person festgestellt, daß Wendeldruckfeder 8 und Ventilschieber korrekt montiert sind, so wird ein im Ventilgehäuse 1 abgestütztes Anschlagelement 27 in die Gehäusebohrung 2 eingeführt und fixiert, an dem sich der Ventilschieber 6 bei einem Verschieben durch die Kraft der Wendeldruckfeder 8 in einer zweiten Endposition abstützt (Figur 4).

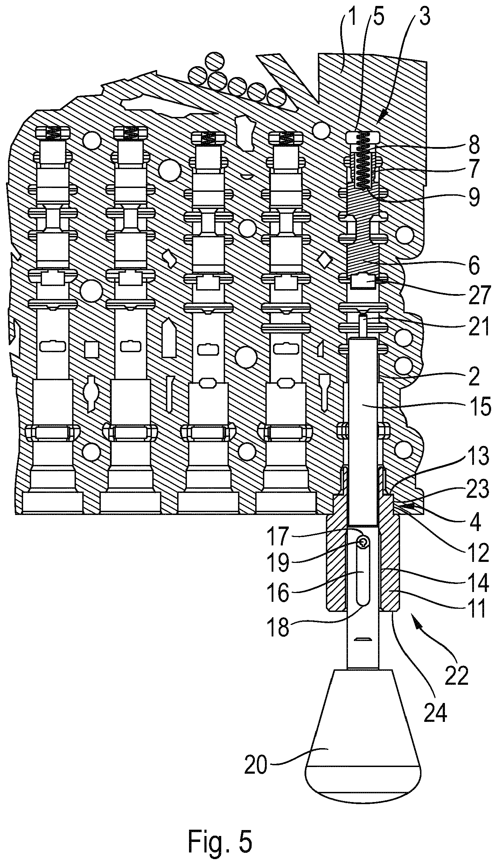

Nun kann der Montageschieber 15 mittels des Betätigungsknopfes 20 in Auswärtsrichtung verschoben werden, bis der Anschlagstift an dem ersten Anschlag 17 zur Anlage gelangt (Figur 5).

Die Montagevorrichtung 22 kann nun aus der Gehäusebohrung 2 entnommen und die nach außen führende Mündung der Gehäusebohrung 2von z.B. einem Stopfen verschlossen werden.

### Bezugszeichen

- 1: Ventilgehäuse
- 2: Gehäusebohrung
- 3: unteres Ende
- 4: oberes Ende
- 5: Boden
- 6: Ventilschieber
- 7: Grundbohrung
- 8: Wendeldruckfeder
- 9: Grund
- 10: Ventiltaschen
- 11: Führungsstück
- 12: Stufe
- 13: dritter Anschlag
- 14: Führung
- 15: Montageschieber
- 16: Langloch
- 17: erster Anschlag
- 18: zweiter Anschlag
- 19: Anschlagstift
- 20: Betätigungsknopf
- 21: Stift
- 22: Montagehilfsvorrichtung
- 23: erweiterte Stufe
- 24: Stirnseite
- 25: erster Abstand
- 26: zweiter Abstand

## Patentansprüche

1. Schieberventil und Montagehilfsvorrichtung (22) zur Montage eines Ventilschiebers (6) in einer Gehäusebohrung (2) eines Ventilgehäuses (1) des Schieberventils, wobei der Ventilschieber (6) an seinem ersten Endbereich von einem an dem Ventilgehäuse (1) abgestützten vorgespannten Federelement kraftbeaufschlagt ist und der zweite Endbereich des Ventilschiebers (6) von einer Stellkraft entgegen der Kraft des Federelements beaufschlagbar ist, mit einer ersten Endposition, in der der axiale Bewegungsweg des Ventilschiebers (6) bei komprimiertem Federelement begrenzt ist und mit einer zweiten Endposition, in der der Bewegungsweg des Ventilschiebers (6) bei nichtkomprimiertem Federelement begrenzt ist, wobei die Gehäusebohrung (2) auf der dem Federelement entgegengesetzten Seite koaxial nach außen mündet und verschließbar ist, **dadurch gekennzeichnet, daß** die Montagehilfsvorrichtung (22) einen Montageschieber (15) aufweist, der in einer Führung (14) eines Führungsstücks (11) verschiebbar angeordnet ist und beidseitig aus der Führung (14) des Führungsstücks (11) herausragt, wobei das Führungsstück (11) einen ersten Anschlag (17) aufweist mit dem das Führungsstück (11) mit der Führung (14) koaxial zur Gehäusebohrung (2) zur Anlage auf das Ventilgehäuse (1) aufsetzbar ist, wobei der Montageschieber (15) bis zur Anlage an dem zweiten Endbereich des Ventilschiebers (6) in die Gehäusebohrung (2) ragt und wobei durch Kraftbeaufschlagung des Montageschiebers (15) unter Komprimieren des Federelements der Ventilschieber (6) bis zum Erreichen der ersten Endposition verschiebbar ist.

2. Schieberventil und Montagehilfsvorrichtung nach Anspruch 1, **dadurch gekennzeichnet, dass** das Federelement eine Wendelfeder (8) ist.

3. Schieberventil und Montagehilfsvorrichtung nach Anspruch 2, **dadurch gekennzeichnet, dass** die Wendelfeder (8) mit ihrem ventilschieberseitigen Ende in eine Grundbohrung (7) des Ventilschiebers (6) ragt.

4. Schieberventil und Montagehilfsvorrichtung nach einem der vorhergehenden Ansprüche, **dadurch gekennzeichnet, dass** ein Anschlagelement (26) an dem Ventilgehäuse (1) montierbar ist, an dem der Ventilschieber (6) in der zweiten Endposition in Anlage ist.

5. Schieberventil und Montagehilfsvorrichtung nach einem der vorhergehenden Ansprüche, **dadurch gekennzeichnet, dass** zweite Endbereich des Ventilschiebers (6) von einem Hydraulikdruck beaufschlagbar ist.

6. Schieberventil und Montagehilfsvorrichtung nach einem der vorhergehenden Ansprüche, **dadurch gekennzeichnet, dass** der Montageschieber (15) an seinem dem Ventilschieber (6) zugewandten Endbereich einen koaxial hervorstehenden Stift (21) aufweist, mit dem der Ventilschieber (6) von dem Montageschieber (15) beaufschlagbar ist.

7. Schieberventil und Montagehilfsvorrichtung nach einem der vorhergehenden Ansprüche, **dadurch gekennzeichnet, dass** der Mündungsbereich der nach außen mündenden Gehäusebohrung (2) mit einem Gewinde versehen ist.

8. Schieberventil und Montagehilfsvorrichtung nach Anspruch 7, **dadurch gekennzeichnet, dass** die nach außen mündende Gehäusebohrung mittels eines Schraubverschlusses verschließbar ist.

9. Schieberventil und Montagehilfsvorrichtung nach Anspruch 7, **dadurch gekennzeichnet, dass** das Führungsstück an seinem auf das Ventilgehäuse aufsetzbaren Endbereichs einen Gewindestutzen aufweist, der in das Gewinde der Gehäusebohrung einschraubbar ist.

10. Schieberventil und Montagehilfsvorrichtung nach einem der vorhergehenden Ansprüche, **dadurch gekennzeichnet, dass** der Montageschieber (15) an seinem aus der Führung (14) des Führungsstücks (11) nach außen herausragenden Ende einen Betätigungsknopf (20) aufweist.
